(19) Europäisches Patentamt
European Patent Office
Office européen des brevets

(11) EP 4 283 722 A1

(12) # EUROPEAN PATENT APPLICATION
published in accordance with Art. 153(4) EPC

(43) Date of publication:
**29.11.2023 Bulletin 2023/48**

(21) Application number: **21920233.0**

(22) Date of filing: **21.01.2021**

(51) International Patent Classification (IPC):
***H01M 4/62*** *(2006.01)* ***H01M 10/0525*** *(2010.01)*

(52) Cooperative Patent Classification (CPC):
Y02E 60/10

(86) International application number:
**PCT/CN2021/073007**

(87) International publication number:
**WO 2022/155830 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
- **LI, Jiawen**
  **Ningde, Fujian 352100 (CN)**
- **SHI, Changchuan**
  **Ningde, Fujian 352100 (CN)**
- **ZHANG, Qingwen**
  **Ningde, Fujian 352100 (CN)**

(74) Representative: **Icosa**
**83 avenue Denfert-Rochereau**
**75014 Paris (FR)**

(54) **BINDER, AND ELECTROCHEMICAL APPARATUS AND ELECTRONIC DEVICE USING BINDER**

(57) A binder includes a polymer, the polymer is polymerized from a first monomer, a second monomer, a third monomer, and a fourth monomer. The first monomer, the second monomer, and the third monomer each are independently selected from an aromatic alkenyl compound, an olefinic unsaturated carboxylic acid, an olefinic unsaturated carboxylic acid salt, or an olefinic unsaturated carboxylic acid ester. The fourth monomer is selected from a substituted or unsubstituted compound containing an amine group and at least two alkenyl groups. By adding the fourth monomer into the binder, this application improves the electrolyte-resistant performance of the binder, improves the lithium-ion conduction performance of the binder, and in turn, improves the low-temperature discharge performance of the battery.



Processed by Luminess, 75001 PARIS (FR)

## Description

### TECHNICAL FIELD

This application relates to the technical field of energy storage, and in particular, to a binder, an electrochemical device containing the binder, and an electronic device.

### BACKGROUND

Electrochemical devices (such as a lithium-ion battery) are widely used in the fields such as mobile phones, computers, electric bicycles, and electric vehicles by virtue of advantages such as a high energy density, a long cycle life, a low self-discharge rate, environment-friendliness, and no pollution. In recent years, with the rapid development of various electronic devices and science and technology, people have put forward higher requirements on the electrochemical performance of lithium-ion batteries, for example, on the low-temperature performance and cycle performance of lithium-ion batteries.

The temperature characteristics, especially poor low-temperature performance, of the lithium-ion batteries restrict wider applications of the lithium-ion batteries, especially in special equipment such as EV/HEV and aerospace and military equipment at low temperatures. As an integral part of a battery, a binder plays a role in improving the electrochemical performance of the battery. In recent years, how to improve the low-temperature performance of lithium-ion batteries by preparing novel binders or other means has become one of research focuses in related fields.

However, the existing binders such as styrene-acrylic emulsion, polyvinylidene fluoride, and carboxymethyl cellulose are unable to improve the low-temperature performance of the battery satisfactorily. Conventional styrene-acrylic emulsions are generally obtained by polymerization of styrene and acrylate, and exhibit the following disadvantage: the affinity between a styrene-acrylic emulsion binder and an electrolyte solution of the battery differs greatly, so that the polar electrolyte solution is unable to penetrate into active material particles of an electrode, and consequently, an interface resistance of the electrode increases. This effect is more obvious at low temperatures, resulting in poor low-temperature discharge performance of the battery.

In view of this, to improve the low-temperature discharge performance of the battery, this application is hereby put forward.

### SUMMARY

A primary objective of this application is to disclose a binder.

A second objective of this application is to disclose an electrochemical device containing the binder, and an electronic device.

To achieve the objectives of this application, the following technical solutions are put forward:

This application relates to a binder. The binder includes a polymer. The polymer is polymerized from a first monomer, a second monomer, a third monomer, and a fourth monomer.

The first monomer, the second monomer, and the third monomer each are independently selected from an aromatic alkenyl compound, an olefinic unsaturated carboxylic acid, an olefinic unsaturated carboxylic acid salt, or an olefinic unsaturated carboxylic acid ester. The first monomer, the second monomer, and the third monomer differ from each other.

The fourth monomer includes a substituted or unsubstituted compound containing an amine group and at least two alkenyl groups.

Preferably, the fourth monomer includes substituted or unsubstituted diallylamine.

In a case of substitution, a substituent on an amine group and a substituent on an alkenyl group each are independently selected from a $C_1$ to $C_{10}$ alkyl group, a $C_1$ to $C_{10}$ alkoxy group, a $C_6$ to $C_{10}$ aralkyl group, a $C_2$ to $C_{10}$ alkenyl group, or a $C_2$ to $C_{10}$ alkynyl group.

Preferably, the fourth monomer includes at least one of diallylamine or N-alkyldiallylamine.

Preferably, the N-alkyldiallylamine includes at least one of N-methyldiallylamine or N-ethyldiallylamine.

Preferably, the first monomer is selected from an aromatic alkenyl compound, the second monomer is selected from an olefinic unsaturated carboxylic acid or an olefinic unsaturated carboxylic acid salt, and the third monomer is selected from an olefinic unsaturated carboxylic acid ester.

Preferably, the aromatic alkenyl compound includes an aromatic vinyl compound.

Preferably, the aromatic alkenyl compound includes at least one of styrene, $\alpha$-methylstyrene, divinylbenzene, tert-butylstyrene, p-methylstyrene, p-ethylstyrene, 1,1-diphenylethylene, vinylnaphthalene, vinylanthracene, or vinylpyridine. More preferably, the aromatic alkenyl compound includes at least one of styrene, $\alpha$-methylstyrene, or divinylbenzene.

Preferably, the olefinic unsaturated carboxylic acid or olefinic unsaturated carboxylic acid salt includes at least one of an acrylic acid, a methacrylic acid, lithium acrylate, potassium acrylate, sodium acrylate, lithium methacrylate, potassium methacrylate, or sodium methacrylate.

Preferably, the olefinic unsaturated carboxylic acid ester includes at least one of alkyl acrylate or alkyl methacrylate. More preferably, the olefinic unsaturated carboxylic acid ester includes a $C_1$ to $C_{10}$ alkyl (the number of carbon atoms is 1 to 10) acrylate or a $C_1$ to $C_{10}$ alkyl (the number of carbon atoms is 1 to 10) methacrylate.

Preferably, the olefinic unsaturated carboxylic acid ester includes at least one of methyl acrylate, ethyl acrylate, isopropyl acrylate, n-butyl acrylate, hexyl acrylate, heptyl acrylate, 2-isooctyl acrylate, lauryl acrylate, methyl methacrylate, ethyl methacrylate, n-propyl methacrylate, isopropyl methacrylate, or 2-isooctyl methacrylate.

Preferably, a mass percent of the fourth monomer in the polymer is 0.1 wt% to 8 wt%, preferably 0.5 wt% to 7 wt%, and more preferably 1 wt% to 6 wt%.

Preferably, a mass percent of the first monomer in the polymer is 5 wt% to 46 wt%, and preferably 10 wt% to 46 wt%.

A mass percent of the third monomer in the polymer is 5 wt% to 45.5 wt%, and preferably 10 wt% to 45.5 wt%.

A mass percent of the second monomer in the polymer is 0.5 wt% to 89.9 wt%, and preferably 1.5 wt% to 79.5 wt%.

The binder polymer of this application is structurally simple, and can be easily prepared by a person skilled in the art based on a structure of the polymer. The preparation process is simple, easy to control, and highly feasible, and brings little environmental pollution, thereby being suitable for industrial mass production.

Specifically, the binder of this application may be prepared by the following method:

mixing one part of an emulsifier with the first monomer, the second monomer, and the third monomer at a specified ratio, and quickly emulsifying the mixture in a specified amount of water to obtain a pre-emulsion; mixing an initiator and another part of the emulsifier with a specified amount of water and dissolving the components evenly, adding the mixture into a first pipette to obtain an initiator emulsion; pouring approximately 1/3 of the resultant pre-emulsion into a reaction vessel, heating up and stirring the pre-emulsion, adding the remaining approximately 2/3 of the pre-emulsion into a second pipette; slowly dripping the initiator emulsion through the first pipette into the reaction vessel when the temperature rises to 60 °C to 80 °C, and dripping the fourth monomer by use of a third pipette at the same time, and controlling the temperature to be approximately 80 °C$\pm$10 °C; and subsequently, slowly dripping the pre-emulsion in the second pipette, keeping a solid content of the emulsion at approximately 50% (in a state of shining blue light), and keeping the temperature for 0.5 h to 4 h; and decreasing the temperature to a room temperature after completion of reaction, and adjusting the pH to a value in a range of approximately 7 to 8 to obtain the binder.

Optionally, the emulsifier may be, for example, high-molecular-weight fatty alcohol polyoxyethylene ether, alkylphenol polyoxyethylene ether, carboxylate (such as potassium laurate), sulfate ester salt (such as sodium dodecyl sulfate), or sulfonate (such as docusate sodium). In a process of preparing the binder, the mass of the one part of emulsifier added is 0.05% to 10%, and preferably 0.1% to 8%, of the sum of the mass of the first monomer, the second monomer, the third monomer, and the fourth monomer.

Optionally, a mass ratio between the one part of emulsifier and the other part of emulsifier is 2: 1 to 6: 1, and preferably 3: 1 to 5: 1.

Optionally, the initiator may be, for example, azobisisobutyronitrile, azobisisoheptanenitrile, 1,1'-azobis(4-cyclohexane carbonitrile), benzoyl peroxide, tert-butyl hydroperoxide, ammonium persulfate, potassium persulfate, 2,2'-azobis(2-methylpropionamide)dihydrochloride (V-50 initiator), 2,2'-azobis[2-(2-imidazolin-2-yl)propane] dihydrochloride (VA-044 initiator), 2,2'-azobis[2-(2-imidazolin-2-yl)propane] (VA-061 initiator), or the like. In a process of preparing the binder, the mass of the initiator added is 0.01% to 1%, and preferably 0.05% to 0.6%, of the sum of the mass of the first monomer, the second monomer, the third monomer, and the fourth monomer.

The binder is prepared by use of the above solvent system or monomer system and preferred emulsifiers and initiators. The mass percent of the components of the binder is controlled to fall within the above range. The preferred polymerization reaction atmosphere, temperature, and time are applied. In this way, the types and mass percent of emulsifiers and initiators are appropriate, the reaction conditions are mild, and the resultant binder exhibits good stability and bonding performance.

The binder of this application may be used in a positive electrode plate, a negative electrode plate, or a separator of an electrochemical device such as a secondary battery. The binder of this application is particularly preferred as a binder of the negative electrode plate of a secondary battery because the binder-induced problems in the negative electrode plate of a secondary battery are more noticeable.

Therefore, this application further relates to an electrochemical device, including a positive electrode plate, a negative electrode plate, an electrolyte solution, and a separator. At least one of the positive electrode plate, the negative electrode plate, or the separator contains the binder of this application.

Preferably, the negative electrode plate contains the binder of this application. The negative electrode plate includes a negative current collector and a negative active material layer applied on a surface of the negative current

collector. The negative active material layer contains the binder.

Preferably, the negative active material layer includes a negative active material, a conductive agent, and a binder. The binder contains the polymer. The mass percent of the binder in the negative electrode film is 0.5 wt% to 8 wt%, and preferably 1 wt% to 4 wt%.

Preferably, the negative active material is not limited, and includes at least one of a graphite-based material or a silicon-based material.

Preferably, the conductive agent is not limited, and includes at least one of conductive carbon black, graphite sheets, carbon fibers, graphene, Ketjen black, single-walled carbon nanotubes, or multi-walled carbon nanotubes.

The method for preparing the negative electrode plate by using a binder is well known to those skilled in the art. Optionally, a method for preparing the negative electrode plate by using the binder of this application is as follows: mixing the binder of this application, a conductive agent, and a negative active material in deionized water to obtain a slurry, and applying the slurry onto a current collector to obtain a negative electrode plate.

Another method for preparing the negative electrode plate by using the binder of this application is as follows: applying the binder of this application onto a current collector directly to form a coating. In some embodiments, the negative electrode plate contains the binder of this application. Specifically, the negative electrode plate includes a negative current collector, a coating, and a negative active material layer. The coating is disposed between the negative current collector and the negative active material layer. The coating includes the binder of this application.

This application further relates to an electronic device, including the electrochemical device.

The technical solutions of this application bring at least the following beneficial effects:

This application provides a binder, an electrochemical device containing the binder, and an electronic device. The binder includes a polymer. The polymer is polymerized from a mixture containing a first monomer, a second monomer, a third monomer, and a fourth monomer. Especially, the fourth monomer is a substituted or unsubstituted compound containing an amine group and at least two alkenyl groups. In this way, the high-molecular-weight polymer is transformed from a linear structure into a polymer that assumes a specified network structure, thereby improving the electrolyte-resistant performance of the binder and improving the physical properties of an adhesive film of the binder. Moreover, the nitrogen atom in the amine group contains a lone pair of electrons. Without participating in conjugation, the lone pair of electrons is of electronegativity to some extent, and can be bonded to lithium ions. Therefore, the film is well permeable to lithium ions, and can effectively alleviate the resistance increase caused by film formation and improve lithium ion conductivity, thereby improving the lithium ion conductivity of the binder.

Therefore, during low-temperature discharge of an electrochemical device (such as a lithium-ion battery) containing the binder of this application, lithium ions can be quickly conducted from the negative electrode plate to the electrolyte solution, thereby achieving good low-temperature discharge performance. Additional aspects and advantages of some embodiments of this application will be partly described or illustrated herein later or expounded through implementation of an embodiment of this application.

This application is further described below with reference to specific embodiments. Understandably, such embodiments are merely intended to illustrate this application but not to limit the scope of this application. Formulas, ratios, and percentages in the embodiments may be selected according to actual conditions without causing any substantive impact on the results.

## DETAILED DESCRIPTION OF EMBODIMENTS

The following describes in detail a binder, an electrochemical device, and an electronic device according to this application.

### [Binder]

According to an aspect of this application, this application relates to a binder. The binder includes a polymer. The polymer is polymerized from a first monomer, a second monomer, a third monomer, and a fourth monomer. The first monomer, the second monomer, and the third monomer each are independently selected from an aromatic alkenyl compound, an olefinic unsaturated carboxylic acid, an olefinic unsaturated carboxylic acid salt, or an olefinic unsaturated carboxylic acid ester. The first monomer, the second monomer, and the third monomer differ from each other. The fourth monomer is selected from a substituted or unsubstituted compound containing an amine group and at least two alkenyl groups. The binder can improve the electrolyte-resistant performance, improve the physical properties of the adhesive film, and increase the lithium ion conductivity, thereby improving the low-temperature discharge performance of the battery and improving the high-temperature storage performance of the battery.

The binder includes a copolymer that is mainly copolymerized from the first monomer, the second monomer, the third monomer, the fourth monomer. Especially, the fourth monomer is selected from a substituted or unsubstituted compound containing an amine group and at least two alkenyl groups. Through reasonable structural design, in a process

of synthesizing the binder, by adding the substituted or unsubstituted compound monomer containing an amine group and at least two alkenyl groups, this application transforms the resultant high-molecular-weight polymer from a linear structure to a network structure. The polymerized binder is more resistant to the electrolyte solution, improves the physical properties of the adhesive film, and exhibits superior low-temperature discharge performance. In addition, the nitrogen atom in the amine group in the binder contains a lone pair of electrons. Without participating in conjugation, the lone pair of electrons is of electronegativity to some extent, and can be bonded to lithium ions. Therefore, the film is well permeable to lithium ions, and can effectively alleviate the resistance increase caused by film formation and improve lithium ion conductivity, thereby improving the lithium ion conductivity of the binder. Therefore, the electrode plate and electrochemical device (such as a secondary battery) containing the binder exhibits good low-temperature discharge performance and good high-temperature storage performance during low-temperature discharge.

As an improvement of the binder of this application, the fourth monomer is selected from substituted or unsubstituted diallylamine. In a case of substitution, a substituent on an amine group and a substituent on an alkenyl group each are independently selected from a $C_1$ to $C_{10}$ alkyl group, a $C_1$ to $C_{10}$ alkoxy group, a $C_6$ to $C_{10}$ aralkyl group, a $C_2$ to $C_{10}$ alkenyl group, or a $C_2$ to $C_{10}$ alkynyl group. Preferably, in a case of substitution, the substituent in the amino group is selected from one of a $C_1$ to $C_{10}$ alkyl group or a $C_2$ to $C_{10}$ alkenyl group.

Unless otherwise specified, a compound or functional group used herein may be substituted or unsubstituted. The term "substituted" used herein means that at least one hydrogen atom included in the compound or functional group is substituted by at least one substituent selected from the following groups: $C_1$ to $C_{10}$ alkyl, $C_1$ to $C_{10}$ alkoxy, $C_1$ to $C_{10}$ aralkyl, $C_2$ to $C_{10}$ alkenyl, $C_2$ to $C_{10}$ alkynyl, $C_1$ to $C_{10}$ alkyl, and a derivative thereof.

As used herein, the term "alkyl" bears the meaning commonly understood in the art, and means a group formed after a saturated hydrocarbon compound consisting of only C and H loses a hydrogen atom from any carbon atom. The term "alkyl" covers linear alkyl groups and branched alkyl groups. The alkyl may be unsubstituted or substituted, but preferably unsubstituted. When the alkyl is substituted, the number of substituents may be, for example, 1 to 3. Examples of alkyl groups mentioned herein include, but are not limited to, methyl, ethyl, n-propyl, isopropyl, n-butyl, sec-butyl, isobutyl, tert-butyl, n-pentyl, n-hexyl, heptyl, octyl, chloromethyl, fluoroethyl, trifluoromethyl, 1,1,1-trifluoroethyl, or the like.

Similarly, the terms such as "alkenyl", "alkynyl", "amino", "alkoxy", and "aralkyl" used herein bear the meanings commonly understood in the art and will not be described in detail here. As an example, the term "alkenyl" covers $C_2$ to $C_{10}$ linear and branched alkenyl groups. Examples of alkenyl include, but are not limited to, vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 5-hexenyl, 6-heptenyl, and the like.

In this application, any numerical range of the number of carbon atoms, such as "the number of carbon atoms is 1 to 10" or "$C_2$ to $C_{10}$", may be expressed as "$C_1$ to $C_{10}$" or "$C_2$ to $_{10}$" or the like, and is an enumeration of all positive integers defined by an upper limit and a lower limit of the range. For example, "$C_1$ to $C_{10}$" means "$C_1$, $C_2$, $C_3$, $C_4$, $C_5$, $C_6$, $C_7$, $C_8$, $C_9$, $C_{10}$". Similarly, any numerical range of the number of substituents is an enumeration of all positive integers defined by an upper limit and a lower limit of the range.

As an improvement of the binder of this application, the number of carbon atoms of the substituted or unsubstituted diallylamine is 6 to 20, preferably 6 to 15, and further preferably 6 to 10.

Specifically, as an improvement of the binder of this application, the fourth monomer is at least one selected from diallylamine or N-alkyldiallylamine. The N-alkyldiallylamine includes at least one of N-methyldiallylamine or N-ethyldiallylamine.

The diallylamine and the N-methyldiallylamine are represented by Formula 1 and Formula 2, respectively:

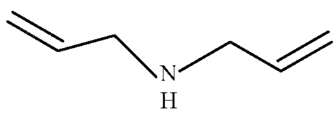

Formula 1

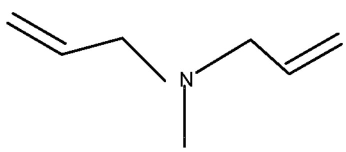

Formula 2

In the above polymer, the above diallylamine, N-methyldiallylamine, or N-ethyldiallylamine is used as the fourth monomer. The raw material is easily available, and the lone pair of electrons on the N atom of the monomer can effectively promote $Li^+$ conduction.

As an improvement of the binder of this application, the mass percent of the fourth monomer in the polymer is 0.1 wt% to 8 wt%. In other words, based on the mass of the polymer, the mass percent of the fourth monomer is 0.1 wt% to 8 wt%, preferably 0.5 wt% to 8 wt%, preferably 0.5 wt% to 7 wt%, and further preferably 1 wt% to 6 wt%. When the mass percent of the fourth monomer is lower than 0.1 wt%, especially lower than 0.5 wt%, the monomer is unable to effectively play the role of ion conduction. When the mass percent of the fourth monomer is higher than 8 wt%, the

synthesis reaction is violent and prone to implosion.

As an improvement of the binder of this application, in the above polymer, the first monomer is selected from an aromatic alkenyl compound, the second monomer is selected from an olefinic unsaturated carboxylic acid or an olefinic unsaturated carboxylic acid salt, and the third monomer is selected from an olefinic unsaturated carboxylic acid ester.

The aromatic alkenyl compound includes an aromatic vinyl compound. The aromatic vinyl compound monomer unit is not particularly limited, and may be any one or more of: styrene, α-methylstyrene, divinylbenzene, tert-butylstyrene, p-methylstyrene, p-ethylstyrene, 1,1-diphenylethylene, vinylnaphthalene, vinylanthracene, or vinylpyridine, for example. Preferably, the aromatic vinyl compound includes at least one of styrene, α-methylstyrene, or divinylbenzene. More preferably, the aromatic vinyl compound is selected from styrene. Among the aromatic vinyl monomer units, styrene units are preferable due to high availability of raw materials.

When the first monomer used in the polymer is two or more of the above aromatic vinyl compounds, the mass ratio between styrene, α-methylstyrene, divinylbenzene, tert-butylstyrene, p-methylstyrene, p-ethylstyrene, 1,1-diphenylethylene, vinylnaphthalene, vinylanthracene, and vinylpyridine is not limited, as long as the percentage of the total mass thereof in the polymer falls within the content range defined in this application.

The olefinic unsaturated carboxylic acid or olefinic unsaturated carboxylic acid salt monomer units are not particularly limited, and may be any one or more of: an acrylic acid, a methacrylic acid, lithium acrylate, potassium acrylate, sodium acrylate, lithium methacrylate, potassium methacrylate, or sodium methacrylate, for example. More preferably, the olefinic unsaturated carboxylic acid is selected from acrylic acid. Among the olefinic unsaturated carboxylic acid monomer units, acrylic acid is preferable due to high availability of the raw material.

If the second monomer used in the polymer is two or more of the above olefinic unsaturated carboxylic acid or olefinic unsaturated carboxylic acid salt, the mass ratio between the acrylic acid, methacrylic acid, lithium acrylate, potassium acrylate, sodium acrylate, lithium methacrylate, potassium methacrylate, and sodium methacrylate is not limited, as long as the percentage of the total mass thereof in the polymer falls within the content range defined in this application.

As an improvement of the binder of this application, the olefinic unsaturated carboxylic acid ester includes alkyl acrylate or alkyl methacrylate. More preferably, the olefinic unsaturated carboxylic acid ester includes a $C_1$ to $C_{10}$ alkyl (the number of carbon atoms is 1 to 10) acrylate or a $C_1$ to $C_{10}$ alkyl (the number of carbon atoms is 1 to 10) methacrylate. Specifically, the olefinic unsaturated carboxylic acid ester monomer units are not particularly limited, and may be any one or more of methyl acrylate, ethyl acrylate, isopropyl acrylate, n-butyl acrylate, hexyl acrylate, heptyl acrylate, 2-isooctyl acrylate, lauryl acrylate, methyl methacrylate, ethyl methacrylate, n-propyl methacrylate, isopropyl methacrylate, or 2-isooctyl methacrylate, for example.

If the third monomer used in the polymer is two or more of the above olefinic unsaturated carboxylic acid salt, the mass ratio between the methyl acrylate, ethyl acrylate, isopropyl acrylate, n-butyl acrylate, hexyl acrylate, heptyl acrylate, 2-isooctyl acrylate, lauryl acrylate, methyl methacrylate, ethyl methacrylate, n-propyl methacrylate, isopropyl methacrylate, or 2-isooctyl methacrylate is not limited, as long as the percentage of the total mass thereof in the polymer falls within the content range defined in this application.

As an improvement of the binder of this application, the mass ratio between the first monomer, the second monomer, and the third monomer is preferably within an appropriate range. Based on the mass of the polymer, the mass percent of the first monomer in the polymer is 5 wt% to 46 wt%, and preferably, 10 wt% to 46 wt%; the mass percent of the third monomer in the polymer is 5 wt% to 45.5 wt%, and preferably 10 wt% to 45.5 wt%; and the mass percent of the second monomer in the polymer is 0.5 wt% to 89.9 wt%, and preferably 1.5 wt% to 79.5 wt%.

When the mass percentages of the first monomer, the second monomer, and third monomer fall within the above ranges, this application avoids the problems arising from high mass percent, for example, low bonding force of the binder, abnormal processing of the slurry, or low affinity with the electrolyte solution; and also avoids the problems arising from low mass percent, for example, poor effect of suppressing expansion of the electrode plate.

In a specific embodiment of this application, the type of binder is an improved styrene-acrylic emulsion, and the polymerization manner may be emulsion polymerization. Specifically, the binder may be prepared by the following method:

mixing one part of an emulsifier with the first monomer, the second monomer, and the third monomer at a specified ratio, and quickly emulsifying the mixture in a specified amount of water to obtain a pre-emulsion; mixing an initiator and another part of the emulsifier with a specified amount of water and dissolving the components evenly, adding the mixture into a first pipette to obtain an initiator emulsion; pouring approximately 1/3 of the resultant pre-emulsion into a reaction vessel, heating up and stirring the pre-emulsion, adding the remaining approximately 2/3 of the pre-emulsion into a second pipette; slowly dripping the initiator emulsion through the first pipette into the reaction vessel when the temperature rises to 60 °C to 80 °C, and dripping the fourth monomer at a specified mass percent through a third pipette at the same time, and controlling the temperature to be approximately 80 °C±10 °C; and subsequently, slowly dripping the pre-emulsion in the second pipette, keeping a solid content of the emulsion at approximately 50%

(in a state of shining blue light), and keeping the temperature for 0.5 h to 4 h; and decreasing the temperature to a room temperature after completion of reaction, and adjusting the pH to a value in a range of approximately 7 to 8 to obtain the binder.

The preparation process of the binder is simple, easy to control, and highly feasible, and brings little environmental pollution, thereby being suitable for industrial mass production.

Optionally, the emulsifier may be, for example, high-molecular-weight fatty alcohol polyoxyethylene ether, alkylphenol polyoxyethylene ether, carboxylate (such as potassium laurate), sulfate ester salt (such as sodium dodecyl sulfate), or sulfonate (such as docusate sodium). In a process of preparing the binder, the mass of the one part of emulsifier added is 0.05% to 10%, and preferably 0.1% to 8%, of the sum of the mass of the first monomer, the second monomer, the third monomer, and the fourth monomer.

Optionally, a mass ratio between the one part of emulsifier and the other part of emulsifier is 2: 1 to 6: 1, and preferably 3: 1 to 5: 1.

Optionally, the initiator may be, for example, azobisisobutyronitrile, azobisisoheptanenitrile, 1,1'-azobis(4-cyclohexane carbonitrile), benzoyl peroxide, tert-butyl hydroperoxide, ammonium persulfate, potassium persulfate, 2,2'-azobis(2-methylpropionamide)dihydrochloride (V-50 initiator), 2,2'-azobis[2-(2-imidazolin-2-yl)propane] dihydrochloride (VA-044 initiator), 2,2'-azobis[2-(2-imidazolin-2-yl)propane] (VA-061 initiator), or the like. In a process of preparing the binder, the mass of the initiator added is 0.01% to 1%, and preferably 0.05% to 0.6%, of the sum of the mass of the first monomer, the second monomer, the third monomer, and the fourth monomer.

Optionally, the mass percent of the first monomer in the polymer is 5 wt% to 46 wt%, and preferably, 10 wt% to 46 wt%; the mass percent of the second monomer in the polymer is 0.5 wt% to 89.9 wt%, and preferably 1.5 wt% to 79.5 wt%; the mass percent of the third monomer in the polymer is 5 wt% to 45.5 wt%, and preferably 10 wt% to 45.5 wt%; and, the mass percent of the fourth monomer in the polymer is 0.1 wt% to 8 wt%, and preferably 0.5 wt% to 7 wt%, and further preferably 1 wt% to 6 wt%.

The binder is prepared by use of the above solvent system or monomer system and preferred emulsifiers and initiators. The mass percent of the components of the binder is controlled to fall within the above range. The preferred polymerization reaction atmosphere, temperature, and time are applied. In this way, the types and mass percent of emulsifiers and initiators are appropriate, the reaction conditions are mild, and the resultant binder exhibits good stability and bonding performance.

During the preparation of the binder, the fourth monomer that is a compound containing an amine group and at least two alkenyl groups is added dropwise along with the initiator that is azo-based or organic peroxy compound. The fourth monomer added at this stage can give full play to the function of the fourth monomer and improve the low-temperature discharge performance of the battery. Especially, the nitrogen atom in the diallylamine monomer in the binder contains a lone pair of electrons. Without participating in conjugation, the lone pair of electrons is of electronegativity to some extent, and can be bonded to lithium ions. Therefore, the film is well permeable to lithium ions, and can effectively alleviate the resistance increase caused by film formation and improve lithium ion conductivity. In addition, with such a diene structure monomer added in the polymer, the linear structure of the high-molecular-weight polymer is transformed into a network structure, thereby improving the electrolyte-resistant performance of the binder and improving the physical properties of the adhesive film.

## [Electrochemical device]

According to another aspect of this application, this application relates to an electrochemical device. The electrochemical device includes a positive electrode plate, a negative electrode plate, an electrolyte solution, and a separator. At least one of the positive electrode plate, the negative electrode plate, or the separator contains the binder of this application.

In the stage of synthesizing the binder of this application, the fourth monomer that is a compound containing an amine group and at least two alkenyl groups is added dropwise along with the initiator that is azo-based or organic peroxy compound. The added fourth monomer makes the high-molecular-weight polymer assume a specified network structure, improves the electrolyte-resistant performance of the binder, improves the physical properties of the adhesive film, and also improves the lithium ion conductivity of the binder. Therefore, during low-temperature discharge of an electrochemical device (such as a lithium-ion battery) prepared by using the binder of this application, lithium ions can be quickly conducted from the negative electrode plate to the electrolyte solution, thereby improving the low-temperature discharge performance of the battery.

The binder of this application may be used for preparing a positive electrode plate/negative electrode plate. The mixture of a positive active material/negative active material and a binder is made into a slurry, and the slurry is applied onto a current collector, and dried to obtain a positive electrode plate/negative electrode plate. Alternatively, the binder of this application may be applied onto a separator, so as to bond the separator to the positive electrode plate or the negative electrode plate. The binder of this application is particularly preferred as a binder of the negative electrode

plate of a secondary battery because the binder-induced problems in the negative electrode plate of a secondary battery are more noticeable.

As an improvement of the negative electrode plate of this application, the negative electrode plate includes a negative current collector and a negative active material layer applied onto a surface of the negative current collector. The binder of this application may be used as a binder in the positive electrode plate, the negative electrode plate, or the separator. The binder of this application is particularly preferred as a binder of the negative electrode plate because the binder-induced problems in the negative electrode plate of a secondary battery are more noticeable.

As an improvement of the negative electrode plate of this application, the negative active material layer includes a negative active material, a conductive agent, and a binder. The binder contains the above polymer.

As an improvement of the negative electrode plate of this application, the mass percent of the binder in the negative active material layer is 0.5 wt% to 8 wt%, preferably 1 wt% to 4 wt%, and further preferably 1 wt% to 2 wt%. In the negative active material layer, when the mass percent of the binder is lower than 0.5 wt%, especially, lower than 1 wt%, the expansion of the negative electrode plate is unable to be suppressed satisfactorily. When the mass percent of the binder is excessive, for example, higher than 8 wt%, the internal resistance of the battery will be excessive, and the cycle performance will deteriorate, or even the energy density of the battery may be impaired, or other problems may occur.

Optionally, the negative active material includes, but is not limited to, at least one of a graphite-based material or a silicon-based material. Specifically, the negative active material may be one or more of artificial graphite, natural graphite, silicon, a silicon-oxygen compound, a silicon-carbon composite, soft carbon, hard carbon, for example.

Optionally, the conductive agent includes, but is not limited to, one or more of conductive carbon black, graphite sheets, carbon fibers, graphene, Ketjen black, single-walled carbon nanotubes, or multi-walled carbon nanotubes.

Optionally, the negative active material layer further includes a thickener or a dispersant. The thickener or dispersant may be a thickener or dispersant known in the art for use in the preparation of a negative electrode plate.

The negative current collector that holds the negative active material may be any known current collector. Examples of the negative current collector include, but are not limited to, a metal material such as aluminum, copper, nickel, stainless steel, and nickel-plated steel. In some embodiments, the negative current collector is a copper foil.

The method for preparing the negative electrode plate by using a binder is well known to those skilled in the art. Optionally, a method for preparing a negative electrode plate by using the binder of this application is as follows: mixing the binder of this application, a conductive agent, a negative active material, and optionally a thickener or dispersant in deionized water to obtain a slurry, and applying the slurry onto a negative current collector, performing drying and cold pressing to form a negative electrode film on the negative current collector, thereby obtaining a negative electrode plate.

The equipment for preparing the slurry is not particularly limited, and may be, for example, a double planetary mixer, a horizontal mixer, a screw kneader, or the like.

The specific method for applying the slurry onto the negative current collector is not particularly limited. For example, the slurry may be applied onto the surface of the negative current collector by means of extrusion, transfer, gravure, spraying, or the like.

The solvent of the slurry is not particularly limited. For example, the solvent may be water or other organic solvents. The organic solvents include, but are not limited to, N-methylpyrrolidone, N,N-dimethylformamide, N,N-dimethylacetamide, or the like.

In addition, another method for preparing the negative electrode plate by using the binder of this application is as follows: applying the binder of this application onto a current collector directly to form a coating. The negative electrode plate contains the binder of this application. Specifically, the negative electrode plate includes a negative current collector, a coating, and a negative active material layer. The coating is disposed between the negative current collector and the negative active material layer. The coating includes the binder of this application.

As an improvement of the positive electrode plate of this application, the positive electrode plate includes a positive current collector and a positive active material layer applied onto a surface of the positive current collector. Further, the positive active material layer includes a positive active material, a conductive agent, and a binder.

As an improvement of the binder in the positive electrode plate, the binder includes, but is not limited to, at least one of polyvinyl alcohol, polytetrafluoroethylene, polyvinylidene fluoride, sodium carboxymethyl cellulose, water-based acrylic resin, poly(ethylene-co-vinyl acetate), styrene-butadiene rubber, fluorinated rubber, or polyurethane.

As an improvement of the positive active material, the positive active material may be a lithium transition metal hybrid compound, or a lithium-containing transition metal phosphate compound. Examples of the positive active material may include, but is not limited to, at least one of lithium cobalt oxide, lithium nickel oxide, lithium manganese oxide, lithium nickel manganese oxide, lithium nickel cobalt manganese oxide, or lithium nickel cobalt aluminum oxide.

As an improvement of the conductive agent, the conductive agent includes, but is not limited to, a carbon material, such as at least one selected from graphite, carbon black, graphene, carbon nanotubes, or conductive fibers. Commonly used conductive agents include Ketjen Black (ultrafine conductive carbon black, with a particle size of 30

nm to 40 nm), SP (Super P, small-particle conductive carbon black, with a particle size of 30 μm to 40 μm), S-O (ultrafine graphite powder, with a particle size of 3 μm to 4 μm), KS-6 (large-particle graphite powder, with a particle size of 6.5 μm), acetylene black, VGCF (vapor-grown carbon fiber, with a particle size of 3 μm to 20 μm). Optional conductive agents further include metal powder, conductive whiskers, a conductive metal compound, conductive polymer, and the like.

As an improvement of the positive active material layer, in the positive active material layer, the mass percent of the positive active material is 80 wt% to 98 wt%, the mass percent of the binder is 1 wt% to 10 wt%, and the mass percent of the conductive agent is 1 wt% to 10 wt%.

As an improvement of the electrolyte solution, the electrolyte solution includes an organic solvent, a lithium salt, and an additive.

As an improvement of the organic solvent, the organic solvent is selected from one or more of conventional organic solvents such as cyclic carbonate, linear carbonate, and carboxylate. Specifically, the organic solvent may be one or more selected from, but is not limited to, ethylene carbonate (EC), propylene carbonate (PC), diethyl carbonate (DEC), ethyl methyl carbonate (EMC), dimethyl carbonate (DMC), fluoroethylene carbonate (FEC), vinylene carbonate (VC), propylene carbonate, dipropyl carbonate, methyl formate, ethyl formate, ethyl propionate (EP), propyl propionate, methyl butyrate, or ethyl acetate.

As an improvement of the lithium salt, the lithium salt is at least one selected from an inorganic lithium salt and an organic lithium salt. The inorganic lithium salt is at least one selected from lithium hexafluorophosphate ($LiPF_6$), lithium tetrafluoroborate ($LiBF_4$), lithium hexafluoroarsenate ($LiAsF_6$), or lithium perchlorate ($LiClO_4$). The organic lithium salt is at least one selected from lithium bis(oxalato)borate ($LiB(C_2O_4)_2$, LiBOB for short), lithium bis(fluorosulfonyl)imide (LiFSI), or lithium bis(trifluoromethanesulfonyl)imide (LiTFSI).

As an improvement of the additive, the additive is one or more selected from a fluorine-containing additive, a sulfur-containing additive, or a compound containing an unsaturated double bond. Specifically, the additive may be one or more selected from, but is not limited to: fluoroethylene carbonate, vinyl sulfite, propane sultone, N-methylpyrrolidone, N-methylformamide, N-methylacetamide, acetonitrile, acrylonitrile, γ-butyrolactone, or methyl sulfide.

To prevent short circuits, a separator is generally disposed between the positive electrode and the negative electrode. In this case, the electrolyte solution usually works by permeating the separator.

The material and shape of the separator are not particularly limited in this application, as long as the effects of this application are not thereby impaired significantly. The separator may be resin, glass fibers, an inorganic compound, or the like formed by a material stable to the electrolyte solution.

In the electrochemical device of this application, the material of the separator includes, but is not limited to, a polymer separator, for example, may be one selected from polyethylene, polypropylene, or a poly(ethylene-co-propylene).

The electrochemical device according to this application may be any device in which an electrochemical reaction occurs. Specific examples of the electrochemical device include all kinds of primary batteries, secondary batteries, fuel batteries, solar batteries, or capacitors. In particular, the electrochemical device is a lithium secondary battery, including a lithium metal secondary battery, a lithium-ion secondary battery, a lithium polymer secondary battery, or a lithium-ion polymer secondary battery.

In some embodiments of this application, using a lithium-ion secondary battery as an example, the lithium-ion secondary battery is prepared by: winding or stacking the positive electrode plate, the separator, and the negative electrode plate sequentially into an electrode assembly, putting the electrode assembly into a package such as an aluminum plastic film ready for sealing, injecting an electrolytic solution, and performing chemical formation and sealing. Subsequently, a performance test and a cycle test are performed on the prepared lithium-ion secondary battery. A person skilled in the art understands that the method for preparing the electrochemical device (such as a lithium-ion battery) described above is merely an example. To the extent not departing from the content disclosed herein, other methods commonly used in the art may be employed.

Optionally, the lithium-ion secondary battery may be a jelly-roll type or stacked-type or multi-tab-structured lithium-ion battery.

In addition, the shape of the outer packaging shell of the lithium-ion secondary battery is in any shape such as cylindrical, prismatic, laminated, buttonshaped, or bulky.

**[Electronic device]**

According to still another aspect of this application, this application relates to an electronic device, including the electrochemical device.

The uses of the electrochemical device according to this application are not particularly limited, and the electrochemical device may be used in any electronic device known in the prior art.

In some embodiments, the electrochemical device according to this application is applicable to, but without being limited to, a notebook computer, peninputting computer, mobile computer, e-book player, portable phone, portable

fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

By using a lithium-ion battery as an example, the following describes a preparation method of a lithium-ion battery with reference to specific embodiments. A person skilled in the art understands that the preparation methods described in this application are merely examples, and any other appropriate preparation methods still fall within the scope of this application.

The following describes some embodiments and comparative embodiments of preparing a lithium-ion battery according to this application, and evaluates performance of the lithium-ion batteries. Unless otherwise expressly specified, reagents, materials, and instruments used in the following embodiments and comparative embodiments are all commercially available.

## Embodiments and Comparative Embodiments

Preparing a binder

(1) Preparing a binder 1

Mixing 2 parts of fatty alcohol polyoxyethylene ether, 25 parts of styrene, 24 parts of butyl acrylate, and 1.5 parts of acrylic acid as measured in parts by mass, and quickly emulsifying the mixture in 40.45 parts of water to obtain a pre-emulsion.

Subsequently, mixing and dissolving well 0.05 part of azobisisobutyronitrile and 0.5 part of fatty alcohol polyoxyethylene ether with 6 parts of water. Adding the mixture into a first pipette to obtain an initiator emulsion.

Pouring 1/3 of the resultant pre-emulsion into a reaction vessel, heating up and stirring the pre-emulsion, and adding the remaining 2/3 of the pre-emulsion into a second pipette. Slowly dripping the initiator emulsion through the first pipette into the reaction vessel when the temperature rises to 80 °C, dripping 0.5 part of diallylamine monomer through a third pipette at the same time, and keeping the temperature at 80 °C. Subsequently, slowly dripping the remaining 2/3 of the emulsion in the second pipette, keeping the emulsion in a state of shining blue light, and keeping the temperature for 4 h; and decreasing the temperature to a room temperature after completion of reaction, and adjusting the pH to a value in a range of 7 to 8 to obtain a binder emulsion.

(2) Preparing binders 2 to 7

The preparation process of the binder 2 is the same as that of the binder 1 except that, different from the binder 1, the binder 2 uses 1 part of diallylamine monomer.

The preparation process of the binder 3 is the same as that of the binder 1 except that, different from the binder 1, the binder 3 uses 3 parts of diallylamine monomer.

The preparation process of the binder 4 is the same as that of the binder 1 except that, different from the binder 1, the binder 4 uses 5 parts of diallylamine monomer.

The preparation process of the binder 5 is the same as that of the binder 1 except that, different from the binder 1, the binder 5 uses 8 parts of diallylamine monomer.

The preparation process of the binder 6 is the same as that of the binder 1 except that, different from the binder 1, the binder 6 uses 5 parts of N-methyldiallylamine monomer.

(3) Preparing the binder 1#

The binder 1# is the existing styrene-acrylic emulsion.

A method for preparing the existing styrene-acrylic emulsion includes: mixing 2 parts of fatty alcohol polyoxyethylene ether, 25 parts of styrene, 24 parts of butyl acrylate, and 1.5 parts of acrylic acid, and quickly emulsifying the mixture in 40.95 parts of water to obtain a pre-emulsion; mixing and dissolving well 0.05 part of potassium persulfate and 0.5 part of fatty alcohol polyoxyethylene ether with 6 parts of water, and adding the mixture into a first pipette to obtain an initiator emulsion; pouring 1/3 of the resultant pre-emulsion into a reaction vessel, heating up and stirring the pre-emulsion, and adding the remaining 2/3 of the pre-emulsion into a second pipette; slowly dripping the initiator emulsion through the first pipette when the temperature of the reaction vessel rises to 80 °C, and keeping the temperature at 80 °C; subsequently, slowly dripping the remaining 2/3 of the emulsion, keeping the emulsion in a state of shining blue light, and keeping the temperature for 4 h; and decreasing the temperature to a room temperature after completion

of reaction, and adjusting the pH to a value in a range of 7 to 8 to obtain a binder emulsion.

In the above binders 1 to 6 and the binder 1#, the specific types of monomers and the mass percent of each monomer are shown in Table 1 below.

**Table 1**

| | Fourth monomer | | Third monomer | | Second monomer | | First monomer | |
|---|---|---|---|---|---|---|---|---|
| | Type | Content (%) | Type | Content (%) | Type | Content (%) | Type | Content (%) |
| 1 | Diallylamine | 0.5 | Butyl acrylate | 24 | Acrylic acid | 1.5 | Styrene | 25 |
| 2 | Diallylamine | 1 | Butyl acrylate | 24 | Acrylic acid | 1.5 | Styrene | 25 |
| 3 | Diallylamine | 3 | Butyl acrylate | 24 | Acrylic acid | 1.5 | Styrene | 25 |
| 4 | Diallylamine | 5 | Butyl acrylate | 24 | Acrylic acid | 1.5 | Styrene | 25 |
| 5 | Diallylamine | 8 | Butyl acrylate | 24 | Acrylic acid | 1.5 | Styrene | 25 |
| 6 | N-methyldiallylamine | 5 | Butyl acrylate | 24 | Acrylic acid | 1.5 | Styrene | 25 |
| 1# | - | - | Butyl acrylate | 24 | Acrylic acid | 1.5 | Styrene | 25 |
| Note: "-" means that the substance is not added. | | | | | | | | |

Preparing a lithium-ion battery

(1) Preparing a negative electrode plate

Adding artificial graphite as a negative active material, conductive carbon black (Super P) as a conductive agent, sodium carboxymethyl cellulose (Daicel 2200) as a thickener, and the prepared negative binder into a water solvent at a mass ratio of 97.3%: 0.5%: 1.2%: 1.0%, and manipulating a Ross double planetary mixer to make a negative slurry. Coating a surface of a 6 μm-thick negative current collector copper foil with the negative slurry at a coating speed of 18 m/min by use of an extrusion coater. Subsequently, baking out the current collector in an oven until a dried state to obtain a negative electrode plate.

(2) Preparing a positive electrode plate

Mixing lithium cobalt oxide as a positive active material, acetylene black as a conductive agent, and polyvinylidene fluoride as a binder with an NMP solvent, and stirring well to form a positive slurry. Coating a surface of a 6 μm-thick positive current collector aluminum foil with the positive slurry, and drying the foil to obtain a positive electrode plate.

(3) Preparing an electrolyte solution

In the electrolyte solution, the concentration of lithium hexafluorophosphate is 1 mol/L, and the organic solvent is formed of ethylene carbonate, propylene carbonate, diethyl carbonate, ethyl propionate, fluoroethylene carbonate, and 1,3-propane sultone.

(4) Separator

The separator is a film coated with ceramic on one side and coated with water-based poly(vinylidene fluoride-co-hexafluoropropylene) on both sides.

(5) Preparing a lithium-ion battery

Welding tabs onto the positive electrode plate and the negative electrode plate, stacking the plates and the separator together, and winding the wound structure to form an electrode assembly. Packaging the electrode assembly in an aluminum laminated film. Baking the packaged product in a vacuum state for 24 hours to dehydrate, and inject the electrolyte solution into the electrode assembly to form a battery cell. Leaving the battery cell to stand at high temperature. Performing chemical formation and grading for the battery cells to obtain a prismatic pouch-type lithium-ion battery with dimensions of 3.8 mm in thickness, 64 mm in width, and 82 mm in height.
In Embodiments 1 to 6, the corresponding lithium-ion batteries B1 to B7 are manufactured by the foregoing method, in which the negative electrode plates are prepared by using the binders 1 to 6 respectively.
In Comparative Embodiment 1, the corresponding lithium-ion battery D1 is manufactured by the foregoing method, in which the negative electrode plate is prepared by using the binder 1#.
In Embodiment 7, the negative electrode plate is prepared by using the binder 3, and the preparation method of the negative electrode plate differs between Embodiment 7 and Embodiment 3 in that the mass ratio between the artificial graphite as a negative active material, the conductive carbon black as a conductive agent, the sodium carboxymethyl cellulose, and the binder is 96.5%: 1.3%: 1.2%: 1.0%.
In Embodiment 8, the negative electrode plate is prepared by using the binder 3, and the preparation method of the negative electrode plate differs between Embodiment 8 and Embodiment 3 in that the mass ratio between the artificial graphite as a negative active material, the conductive carbon black as a conductive agent, the sodium carboxymethyl cellulose, and the binder is 95.3%: 2.5%: 1.2%: 1.0%.
In Embodiment 9, the negative electrode plate is prepared by using the binder 3, and the preparation method of the negative electrode plate differs between Embodiment 9 and Embodiment 3 in that the mass ratio between the artificial graphite as a negative active material, the conductive carbon black as a conductive agent, the sodium carboxymethyl cellulose, and the binder is 97.5%: 0.5%: 0.5%: 1.5%.

**Performance Test**

The performance parameter test methods in the embodiments and comparative embodiments are as follows.

1) Peel force of the electrode plate

Cutting out a specimen of 30 mm (width) × (100 mm to 160 mm) (length) in size from an electrode plate by using a cutter. Affixing special-purpose double-sided tape onto a steel sheet, where the size of the tape is 20 mm (width) × (90 mm to 150 mm) (length). Affixing the electrode plate specimen taken in the preceding step onto the double-sided tape, with the test side facing down. Inserting a paper tape beneath the electrode plate and fixing the paper tape by using a crepe adhesive, where the width of the paper tape is equal to the width of the electrode plate, and the length of the paper tape is 80 to 200 mm, which is greater than the length of the electrode plate specimen; Turning on a tensile testing machine so that the indicator of the testing machine is on. Adjusting a stop block of the testing machine to an appropriate position. Using a lower clamp to fix an end of the steel sheet, where the end is an end to which no electrode plate is affixed. Folding the paper tape upward, fixing the paper tape with an upper clamp, and adjusting the position of the upper clamp by using an "Up" button and a "Down" button on a manual controller shipped together with the tensile testing machine. Recording the test data.

2) Wet-film peel force

Soaking an electrode plate specimen in an electrolyte solution for 24 hours, and then taking out the specimen. Dehydrating the surface by using a piece of absorbent paper, and then measuring the peel force of the electrode plate according to the forgoing section headed "1) Peel force of the electrode plate".

3) Slurry stability

Taking a cup of slurry and placing the slurry in a normal temperature environment to stand for 24 hours (or 48 hours), and then obtaining the bottom slurry by using an iron sheet or a scraper. Subsequently, putting the iron sheet or scraper vertically to allow the slurry on the iron sheet or scraper to flow naturally. If a lump of slurry remains on the iron sheet or the scraper and cannot flow down normally, the slurry is deposited; otherwise, the slurry is not deposited.

4) Rebound of an electrode plate in a fully charged state

Spreading out flat an electrode plate that is coated and dried, measuring the thickness of the electrode plate with a ten-thousandth micrometer, and recording the measured thickness as h1. Charging a fresh battery to a full capacity, and then disassembling the battery. Taking out the electrode plate, and spreading the electrode plate flat. Measuring the thickness of the electrode plate with a ten-thousandth micrometer, and recording the measured thickness as h2. Calculating the rebound rate of the electrode plate in a fully charged state according to the following formula:

$$\text{Rebound rate of the electrode plate in a fully charged rate} = (h1 - h2)/h1 \times 100\%.$$

5) Thickness rebound rate of a fully charged battery after storage at 60 °C

Measuring the thickness of a fresh battery with a micrometer, denoted as h3. Charging the battery to a full capacity, storing the fully charged battery in a muffle oven at 60 °C for 30 days, and then taking the battery out, and measuring the thickness of the battery with a micrometer, denoted as h4. Calculating the thickness rebound rate of the fully charged battery after storage at 60 °C according to the following formula:

$$\text{Thickness rebound rate of a fully charged battery after storage at 60 °C for 30 days} = (h3 - h4)/h3 \times 100\%.$$

6) Thickness rebound rate of a fully charged battery after storage at 85 °C

Measuring the thickness of a fresh battery with a micrometer, denoted as h5. Charging the battery to a full capacity, storing the fully charged battery in a muffle oven at 85 °C for 7 hours, and then taking the battery out, and measuring the thickness of the battery with a micrometer, denoted as h6. Calculating the thickness rebound rate of the fully charged battery after storage at 85 °C according to the following formula:

$$\text{Thickness rebound rate of a fully charged battery after storage at 85 °C for 7 hours} = (h5 - h6)/h5 \times 100\%.$$

7) 1.5 C @ 12 °C discharge

Adjusting the temperature of the test box to 12 °C, charging and discharging the battery for 1 cycle at 1.5 C, and recording the initial capacity as $q_{12}$. Continuing to charge and discharge the battery at such a current rate for 10 cycles, and recording the 10$^{th}$-cycle capacity as $q_{12-10}$.

8) 1.0 C@0 °C discharge

Adjusting the temperature of the test box to 0 °C, charging and discharging the battery for 1 cycle at 1.0 C, and recording the initial capacity as $q_0$. Continuing to charge and discharge the battery at such a current rate for 10 cycles, and recording the 10$^{th}$-cycle capacity as $q_{0-10}$.

9) Capacity retention rate after 500 cycles at 25 °C

Charging and discharging a fresh battery for 1 cycle, and recording the initial capacity as $q_1$. Continuing to charge and discharge the battery for 500 cycles, and recording the 500$^{th}$-cycle capacity as $q_2$. Calculating the capacity retention rate after 500 cycles performed at 25 °C according to the following formula:

$$\text{Capacity retention rate after 500 cycles performed at 25 °C} = (q_1 - q_2)/q_1 \times 100\%.$$

10) Expansion rate of the battery charged and discharged for 500 cycles at 25 °C

Measuring the thickness of a fresh battery with a micrometer, denoted as h7. Charging the battery to a full capacity, putting the fully charged battery in a thermostat, and charging and discharging the battery for 500 cycles. Taking the battery out, and measuring the thickness of the battery with a micrometer, denoted as h8. Calculating the expansion rate of the battery charged and discharged for 500 cycles at 25 °C according to the following formula:

$$\text{Expansion rate of the battery charged and discharged for 500 cycles at 25 °C} = (h7 - h8)/ h8 \times 100\%.$$

**Test Results**

Table 2 sets out the performance test results of lithium-ion batteries in Embodiments 1 to 9 and Comparative Embodiment 1

**Table 2**

| Item | Peelforce of electrode plate | Wet-film peel force | Slurry stability | Rebound of electrode plate in a fully charged state | Thickness rebound rate of fully charged battery after storage at 60 °C | Thickness rebound rate of fully charged battery after storage at 85 °C | 1.5 C@12 °C discharge | 1.0 C@0 °C discharge | Capacity retention rate after 500 cycles at 25 °C | Expansion rate of battery charged and discharged for 500 cycles at 25 °C |
|---|---|---|---|---|---|---|---|---|---|---|
| | N/m | N/m | 48 h | % | 30 d | 7h | | | | |
| Embodiment 1 | 8.9 | 4.0 | Not deposited | 23.14 | 12.02% | 17.48% | Slight lithium plating | Slight lithium plating | 92.8% | 8.01% |
| Embodiment 2 | 10.4 | 4.7 | Not deposited | 23.08 | 11.54% | 17.25% | No lithium plating | Slight lithium plating | 93.0% | 7.61% |
| Embodiment 3 | 13.2 | 6.9 | Not deposited | 22.91 | 8.45% | 16.85% | No lithium plating | No lithium plating | 93.0% | 7.53% |
| Embodiment 4 | 15.6 | 8.2 | Not deposited | 22.78 | 7.66% | 16.22% | No lithium plating | No lithium plating | 93.1% | 7.15% |
| Embodiment 5 | 16.1 | 8.9 | Not deposited | 22.56 | 7.56% | 16.08% | No lithium plating | No lithium plating | 93.0% | 7.03% |
| Embodiment 6 | 15.8 | 8.3 | Not deposited | 22.80 | 7.52% | 16.38% | No lithium plating | No lithium plating | 93.0% | 7.21% |
| Embodiment 7 | 13.5 | 6.5 | Not deposited | 22.92 | 8.35% | 16.78% | No lithium plating | No lithium plating | 93.1% | 7.47% |
| Embodiment 8 | 13.8 | 7.1 | Not deposited | 22.94 | 8.40% | 16.81% | No lithium plating | No lithium plating | 93.23% | 7.50% |
| Embodiment 9 | 16.2 | 9.1 | Not deposited | 21.98 | 7.69% | 16.05% | No lithium plating | No lithium plating | 93.0% | 7.07% |
| Comparative Embodiment 1 | 9.2 | 1.8 | Not deposited | 23.32 | 12.16% | 18.08% | Severe lithium plating | Severe lithium plating | 92.8% | 8.15% |

As shown in the data in Table 2 above, when the binder of this application is applied to the negative electrode plate of a lithium-ion battery, the peel force of the electrode plate and the wet-film peel force can be increased significantly. The relatively high bonding force contributes to maintaining the structural integrity of the electrode plate during cycling of the battery. Therefore, after 500 cycles, compared with the lithium-ion battery provided in Comparative Embodiment 1, the lithium-ion batteries provided in Embodiments 1 to 9 of this application achieve a higher capacity retention rate and a lower expansion rate. In particular, severe lithium plating occurs in the lithium-ion battery in Comparative Embodiment 1 in a low-temperature discharge process. In contrast, the lithium-ion batteries provided in Embodiments 1 to 9 of this application have improved the lithium ion conductivity in the low-temperature discharge process, and therefore, the lithium plating occurs scarcely or just slightly, and the low-temperature discharge performance of the lithium-ion batteries is improved.

This application has been disclosed above with reference to exemplary embodiments, but the exemplary embodiments are not intended to limit the claims. Any person skilled in the art may make various variations and modifications to this application without departing from the conception of this application. Therefore, the protection scope of this application is subject to the claims hereof.

## Claims

1. A binder, **characterized in that**, the binder comprises a polymer, and the polymer is polymerized from a first monomer, a second monomer, a third monomer, and a fourth monomer; wherein

    the first monomer, the second monomer, and the third monomer each are independently selected from an aromatic alkenyl compound, an olefinic unsaturated carboxylic acid, an olefinic unsaturated carboxylic acid salt, or an olefinic unsaturated carboxylic acid ester; and the first monomer, the second monomer, and the third monomer are different from each other; and
    the fourth monomer comprises a substituted or unsubstituted compound containing an amine group and at least two alkenyl groups.

2. The binder according to claim 1, **characterized in that**, the fourth monomer comprises substituted or unsubstituted diallylamine; and
   in a case of substitution, a substituent on an amine group and a substituent on an alkenyl group each are independently selected from a $C_1$ to $C_{10}$ alkyl group, a $C_1$ to $C_{10}$ alkoxy group, a $C_6$ to $C_{10}$ aralkyl group, a $C_2$ to $C_{10}$ alkenyl group, or a $C_2$ to $C_{10}$ alkynyl group.

3. The binder according to claim 1, **characterized in that**, the fourth monomer comprises at least one of diallylamine or N-alkyldiallylamine.

4. The binder according to claim 3, **characterized in that**, the N-alkyldiallylamine comprises at least one of N-methyldiallylamine or N-ethyldiallylamine.

5. The binder according to claim 1, **characterized in that**, a mass percent of the fourth monomer in the polymer is 0.1 wt% to 8 wt%.

6. The binder according to claim 1, **characterized in that**, the first monomer comprises an aromatic alkenyl compound, the second monomer comprises an olefinic unsaturated carboxylic acid or an olefinic unsaturated carboxylic acid salt, and the third monomer comprises an olefinic unsaturated carboxylic acid ester.

7. The binder according to claim 6, **characterized in that**, the aromatic alkenyl compound comprises at least one of styrene, $\alpha$-methylstyrene, divinylbenzene, tert-butylstyrene, p-methylstyrene, p-ethylstyrene, 1,1-diphenylethylene, vinylnaphthalene, vinylanthracene, or vinylpyridine.

8. The binder according to claim 6, **characterized in that**, the olefinic unsaturated carboxylic acid or olefinic unsaturated carboxylic acid salt comprises at least one of an acrylic acid, a methacrylic acid, lithium acrylate, potassium acrylate, sodium acrylate, lithium methacrylate, potassium methacrylate, or sodium methacrylate.

9. The binder according to claim 6, **characterized in that**, the olefinic unsaturated carboxylic acid ester comprises at least one of methyl acrylate, ethyl acrylate, isopropyl acrylate, n-butyl acrylate, hexyl acrylate, heptyl acrylate, 2-isooctyl acrylate, lauryl acrylate, methyl methacrylate, ethyl methacrylate, n-propyl methacrylate, isopropyl methacrylate, or 2-isooctyl methacrylate.

**10.** The binder according to any one of claims 1 to 9, **characterized in that**, a mass percent of the first monomer in the polymer is 5 wt% to 46 wt%; a mass percent of the second monomer in the polymer is 0.5 wt% to 89.9 wt%; and a mass percent of the third monomer in the polymer is 5 wt% to 45.5 wt%.

**11.** An electrochemical device, comprising a positive electrode plate, a negative electrode plate, an electrolyte solution, and a separator; **characterized in that** at least one of the positive electrode plate, the negative electrode plate, or the separator contains the binder according to any one of the claims 1 to 10.

**12.** The electrochemical device according to claim 11, **characterized in that**, the negative electrode plate comprises a negative current collector and a negative active material layer; the negative active material layer comprises a negative active material, a conductive agent, and the binder according to any one of claims 1 to 10; and a mass percent of the binder in the negative active material layer is 0.5 wt% to 8 wt%.

**13.** An electronic device, **characterized in that**, the electronic device comprises the electrochemical device according to any one of claims 11 to 12.

## INTERNATIONAL SEARCH REPORT

International application No. **PCT/CN2021/073007**

**A. CLASSIFICATION OF SUBJECT MATTER**

H01M 4/62(2006.01)i；H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, CNABS, DWPI, SIPOABS: 粘结剂, 二烯丙基胺, 羧酸, 烯酸, 酯, 苯, binder, amine, carboxyl, acrylic, allyl, resin, benzene

**C. DOCUMENTS CONSIDERED TO BE RELEVANT**

| Category* | Citation of document, with indication, where appropriate, of the relevant passages | Relevant to claim No. |
|---|---|---|
| X | CN 102770995 B (LG CHEM, LTD.) 26 August 2015 (2015-08-26) claims 1-15, description paragraphs 0016-0035, 0079 | 1-13 |
| X | CN 102473923 A (LG CHEM, LTD.) 23 May 2012 (2012-05-23) description, paragraphs [0014]-[0034] | 1-13 |
| A | EP 1892328 A1 (KIMBERLY CLARK WORLDWIDE, INC.) 27 February 2008 (2008-02-27) entire document | 1-13 |

☐ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **13 August 2021** | **27 September 2021** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/073007**

| Patent document cited in search report | | | Publication date (day/month/year) | Patent family member(s) | | | Publication date (day/month/year) |
|---|---|---|---|---|---|---|---|
| CN | 102770995 | B | 26 August 2015 | CN | 102770995 | A | 07 November 2012 |
| | | | | KR | 20110098111 | A | 01 September 2011 |
| | | | | US | 9054382 | B2 | 09 June 2015 |
| | | | | EP | 2541658 | A4 | 25 December 2013 |
| | | | | US | 2012183848 | A1 | 19 July 2012 |
| | | | | EP | 2541658 | B1 | 01 February 2017 |
| | | | | WO | 2011105687 | A2 | 01 September 2011 |
| | | | | WO | 2011105687 | A3 | 03 November 2011 |
| | | | | EP | 2541658 | A2 | 02 January 2013 |
| | | | | KR | 101077870 | B1 | 28 October 2011 |
| CN | 102473923 | A | 23 May 2012 | US | 8420260 | B2 | 16 April 2013 |
| | | | | EP | 2466672 | A2 | 20 June 2012 |
| | | | | EP | 2466672 | A4 | 30 January 2013 |
| | | | | US | 2012189911 | A1 | 26 July 2012 |
| | | | | WO | 2011019142 | A3 | 21 April 2011 |
| | | | | WO | 2011019142 | A2 | 17 February 2011 |
| | | | | EP | 2466672 | B1 | 23 April 2014 |
| | | | | KR | 20110017818 | A | 22 February 2011 |
| | | | | KR | 101138629 | B1 | 26 April 2012 |
| | | | | CN | 102473923 | B | 18 June 2014 |
| EP | 1892328 | A1 | 27 February 2008 | EP | 1773945 | B1 | 21 July 2010 |
| | | | | MX | 2007000431 | A | 07 March 2007 |
| | | | | US | 2006014884 | A1 | 19 January 2006 |
| | | | | JP | 2008508367 | A | 21 March 2008 |
| | | | | DE | 602005022450 | D1 | 02 September 2010 |
| | | | | DE | 602005018968 | D1 | 04 March 2010 |
| | | | | WO | 2006019459 | A1 | 23 February 2006 |
| | | | | AU | 2005273005 | B2 | 23 December 2010 |
| | | | | EP | 1892328 | B1 | 13 January 2010 |
| | | | | EP | 1773945 | A1 | 18 April 2007 |
| | | | | AU | 2005273005 | A1 | 23 February 2006 |
| | | | | KR | 20070032324 | A | 21 March 2007 |
| | | | | | MX263929 | B | 20 January 2009 |
| | | | | US | 7297231 | B2 | 23 December 2010 |

Form PCT/ISA/210 (patent family annex) (January 2015)